# EUROPEAN PATENT APPLICATION

(11) **EP 1 734 354 A2**
(43) Date of publication of application: **20.12.2006**
(21) Application number: 06253120.7
(22) Date of filing: 15.06.2006
(51) Int. Cl.: G01M 15/14, G01M 15/12

(54) **Engine status detection with external microphone**

(30) Priority: 16.06.2005 US 153451
(71) Applicant: PRATT & WHITNEY CANADA CORP., Longueuil, Quebec J4G 1A1 (CA)
(72) Inventor: Thomassin, Jean, Ste-Julie, Québeq J3E 2K2 (CA); Dooley, Kevin A., Mississauga, Ontario L5K 2E3 (CA); Ficklscherer, Peter, Saint-Bruno, Québeq J3V 6E4 (CA)
(74) Representative: Leckey, David Herbert

(57) **Abstract**

A method of detecting at least one engine condition of a gas turbine engine (10) using a microphone (22) disposed outside a region of the gas turbine engine (10) to be monitored. The method includes receiving a signal produced by the microphone (22) in response to audible frequencies, analyzing the signal to determine at least one signal characteristic representative of the engine condition, and detecting the engine condition based on the signal produced by the microphone (22).

## Description

### TECHNICAL FIELD

The invention relates generally to the monitoring of gas turbine engine status information and, more particularly, to the use of a microphone therefor.

### BACKGROUND OF THE ART

The use of sensors disposed within a gas turbine engine to monitor various characteristics during the operation thereof, either during ground-based tests or for inflight monitoring, is well documented. Such sensors are typically used to measure temperature, pressure, rotational speed of components, and the like, and are typically disposed within the core of the gas turbine engine at selected points therein. Such intrusive sensors must be integrated into the engine design, and their presence can in fact affect the very characteristic which they are measuring. Non-intrusive sensors which are external to the engine are significantly more practical and cost effective to assemble, replace, monitor, etc. However, many characteristics which are measured are generally not thought to be able to monitored using a sensor disposed external to the engine casing.

Accordingly, there is a need to provide an improved method of determining characteristics and/or detecting status information of a gas turbine engine, using an externally mounted sensor.

### SUMMARY OF THE INVENTION

It is therefore an object of this invention to provide an improved method of detecting engine status information of a gas turbine engine, and a system for performing same.

In one aspect, the present invention provides a method of monitoring at least one engine condition of a gas turbine engine comprising: mounting a microphone within audible range of a region of the gas turbine engine to be monitored, the microphone being spaced apart from said region; receiving a signal produced by the microphone in response to sound frequencies generated by fluid flow through the gas turbine engine during operation thereof; analyzing the signal to identify at least one characteristic representative of the engine condition; and determining the engine condition based principally on the signal produced by the microphone.

In another aspect, the present invention provides a method of detecting surge of a compressor in a gas turbine engine comprising: mounting a microphone in spaced apart relation with a main gas flow path of the compressor, within audible range thereof; receiving a signal produced by the microphone in response to audible frequencies generated by fluid flow through the compressor during operation of the gas turbine engine; analyzing the signal to determine at least one characteristic representative of compressor surge; and detecting compressor surge based on said signal produced by said microphone.

In another aspect, the present invention provides a non-intrusive method of monitoring aerodynamic characteristics of at least one aerodynamic component in a gas turbine engine, the method comprising: using a microphone spaced apart from a region of the gas turbine engine to be monitored and within audible range of the aerodynamic component therewithin, to produce an electrical output in response to audible frequencies corresponding to pressure pulsations in gas flowing past the aerodynamic component during operation of the gas turbine engine, the audible frequencies defining a noise signature of the aerodynamic component; conducting a time-based frequency analysis of the electrical output to monitor changes in the noise signature; and detecting an abnormal aerodynamic characteristic based on the electrical output produced by the microphone.

In yet another aspect, the present invention provides a system for detecting at least one engine status characteristic of a gas turbine engine comprising: a microphone spaced apart from a region of the gas turbine engine to be monitored; and a signal processor operable to receive an electrical signal produced by the microphone in response to audible frequencies defining a noise signature which corresponds to pressure pulsations in fluid flowing through the gas turbine engine during operation thereof, the signal processor being operable to analyze the electrical signal to detect said engine status characteristic based principally on the noise signature representative of said engine status characteristic.

Further details of these and other aspects of the present invention will be apparent from the detailed description and figures included below.

### DESCRIPTION OF THE DRAWINGS

Reference is now made to the accompanying figures depicting aspects of the present invention, in which:
Fig. 1 is a schematic cross-section of a gas turbine engine;
Fig. 2 is a partial cross-sectional view of a gas turbine engine compressor section having a microphone mounted externally thereto in accordance with an embodiment of the present invention;
Fig. 3 is a graphical representation of a time based frequency analysis of a microphone output used to monitor status of a gas turbine engine compressor section; and
Fig. 4 is a flow chart of a method of determining an engine condition using a microphone in accordance with an embodiment of the present invention.

### DETAILED DESCRIPTION OF THE PREFERRED EMBODIMENTS

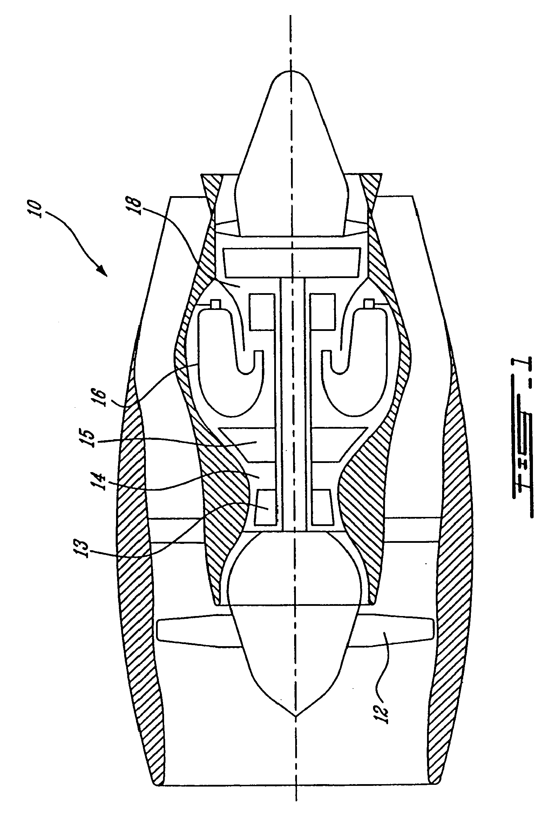

Fig.1 illustrates a typical gas turbine engine 10 of a type preferably provided for use in subsonic flight, generally comprising in serial flow communication a fan 12 through which ambient air is propelled, a multistage compressor 14 for pressurizing the air, an annular reverse flow combustor 16 in which the compressed air is mixed with fuel and ignited for generating an annular stream of hot combustion gases, and a turbine section 18 for extracting energy from the combustion gases.

The multistage compressor 14 comprises a first low pressure compressor stage 13 followed downstream by a high pressure compressor stage 15. Although the present invention will be described with reference to the gas turbine engine 10 having such a multiple stage compressor 14 and a reverse flow combustor 16, it is to be understood that the method in accordance with the present invention can similarly be employed with another type of gas turbine engine, for example having only axial compressors or only centrifugal compressors. Further, the gas turbine engine may also alternately comprise a straight flow, or "cannular" combustor for example.

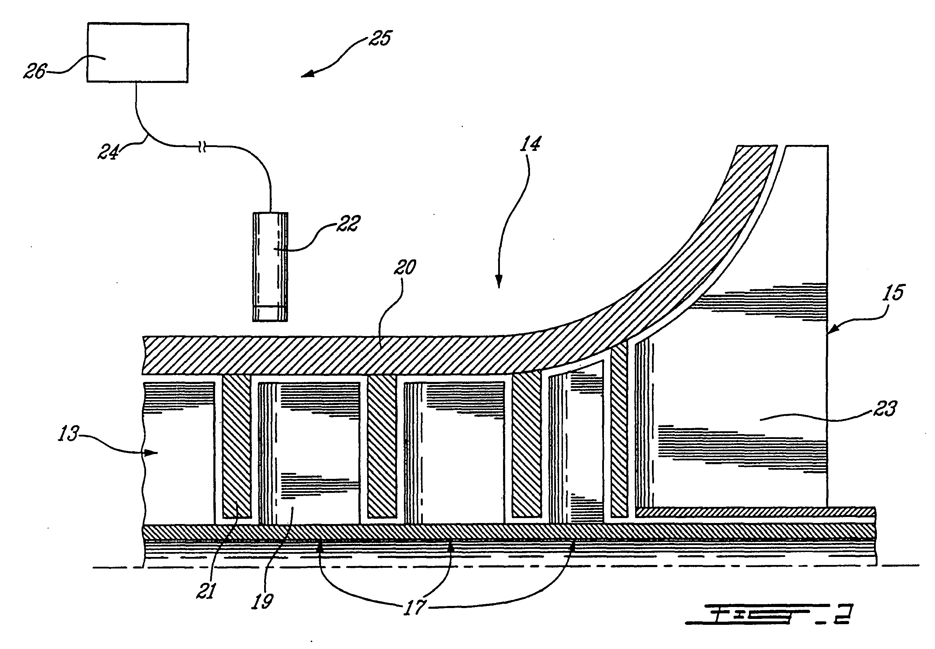

Referring to Fig. 2, the multistage compressor 14 is made up of a low pressure compressor 13 comprising several axial stages 17, each having a paired rotor 19 and stator 21, and a centrifugal high pressure compressor 15 in the form of an impeller 23. The compressor 14 is disposed within an outer casing 20, within which the gas flow path is defined. As schematically depicted in Fig. 2, the engine characteristic detection system 25 includes a microphone 22, mounted outside of (i.e. spaced apart from) the compressor casing 20 and a signal processor 26, in electrical connection with the microphone 22 via connecting wiring 24. The microphone 22 is accordingly placed spaced outwards of the casing 20 within audible range of at least one rotating stage of the compressor 14, and produces an electrical output signal in response to audible frequencies generated by the fluid flowing through main gas path of the compressor 14 and/or the rotating components thereof. The audible frequencies picked up by the microphone 22 correspond to pressure pulsations of the fluid flow as it is compressed by each of the stages of the compressor. Generally, the pressure pulses in the fluid oscillate at the blade passing frequency of each rotating compressor component such as the axial rotors 19 and the impeller 23. As the frequencies of each of the components tend to differ, the single microphone 22 and signal processor 26 permit the detection and identification of the pressure pulsations of several of the compressor components simultaneously, the pressure pulsations defining a noise signature representative of the selected engine status characteristic to be detected. The system 25 preferably further includes an alerting device in communication with the signal processor 26, which is operable to indicate that the given engine status characteristic is present or impending. This information may then be transferred and received by an electronic engine control system, which may then use logic to decide, based on given parameters, what response or appropriate action is to be taken. In the case of compressor stall, for example, this may include shutting down the engine, or varying flow characteristics to help prevent the onset of full compressor surge.

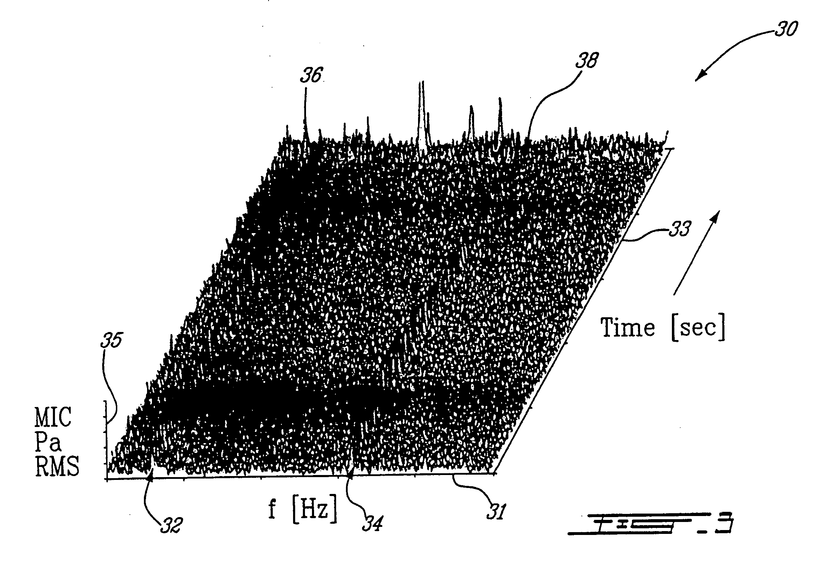

By conducting a frequency analysis of the output signal of the microphone 22 using the signal processor 26, the aerodynamic loading on each of the compressor stages is able to be determined and monitored in real time during operation of the gas turbine engine, without requiring any intrusive internal pressure sensors. A sample 3-D frequency analysis plot 30 is shown in Fig. 3. Although the plot 30 depicted results from a frequency analysis conducted on a compressor having an axial stage and a centrifugal stage, such an analysis can equally be employed for other compressor configurations of a gas turbine engine. The frequency analysis plot 30 comprises frequency (f) as measured in Hertz (Hz) on the x-axis 31, time as measured in seconds (sec) on the y-axis 33, and pressure depicted on the vertical z-axis 35 as represented by the output signal of the microphone. As the microphone is able to pick up and measure frequencies over a broad range simultaneously, it is able to detect the pressure pulsations of the fluid flow at several points in the main gas flow path of the gas turbine engine. For example, as shown in the example of Fig. 3, the measure frequency analysis plot 30 includes a first pressure pulsation 32 of an axial compressor rotor of the gas turbine compressor section, defined at a first frequency, and a second pressure pulsation of an impeller of a centrifugal compressor stage of engine, defined at a slightly higher frequency. Thus, the microphone output signal, once processed by the signal processor 26 into a form which can be analyzed, represents the pressure pulsations at several points simultaneously in the engine. This permits the determination of several factors related thereto, such as the aerodynamic loading on each of these compressor stages for example. Any changes in these pressure pulsations can therefore be detected, either manually by an operator monitoring the measure data, or automatically by a control unit which includes the signal processor 26. Changes in the monitored pressure pulsations can be indicative of engine conditions for which detection is sought. For example, compressor stall or surge can be detected by identifying changes in the measured pressure pulsations of the compressor components which are indicative of such a condition. Specifically, when a rotating stall is initiated in a compressor, the pressure pulse which is oscillating at the blade passing frequency of the nearby compressor stage, tends to initially increase as a result of the increased aerodynamic load on the compressor stage and then subsequently significantly decrease as the stalled air having low momentum progresses through the compressor. Accordingly, compressor surge and/or stall can be detected when such changes in the pressure pulsations measured by the externally mounted microphone are detected. Preferably, the output of the microphone is the principal measured characteristic used to detect such an engine condition (i.e. compressor surge and/or stall). More preferably still, solely the microphone output is used by the signal processor to detect such a condition. This permits the passive surge margin of the compressor to be enhanced, and accurate prediction of the onset of compressor surge can be readily detected by the microphone mounted outside the engine casing, without requiring any additional intrusive or complex sensors disposed within the flow path, such as fast response static pressure transducers for example.

Referring back to Fig. 3, the noise signature of the centrifugal compressor corresponding to the pressure pulsation 34 depicts stall of this compressor stage and subsequent engine surge. Particularly, the impeller noise signature 34 drops off suddenly at point 36. This represents an abrupt pressure drop which indicates that the impeller has stalled. In comparison, the noise signature of the axial rotor corresponding to the pressure pulsation 32 remains relatively constant at the same point in time. As time increases, the stalled air eventually causes the compressor to surge, as evidenced at point 38 by the uneven pressure distribution across all frequencies. Active surge control and incipient surge protection is therefore possible using the lone externally mounted microphone. This can be either used for monitoring an operating gas turbine engine during in-service operation thereof, or as a means of optimizing a given compressor design during the design and development of the gas turbine engine. When used in-service to detect the onset of compressor surge, the signal processor 26 may be configured for communication with an electronic engine control system operable to alert an operator or pilot of the onset of said condition and to shut down the engine completely if necessary. Such an electronic control system could further permit flow conditions in the compressor to be modified such that compressor surge is prevented.

Therefore, detection of gas turbine engine conditions such as compressor surge is made in the present invention using solely the output produced by a microphone mounted externally to the engine casing. As such, real time monitoring of the aerodynamic loading of several engine components simultaneously is possible without requiring any internally mounted sensors or transducers. This permits significant cost saving as a result of reduced complexity of the engine design to accommodate such traditionally used internal probes and sensors, and further makes replacement, repair or adjustment of the externally mounted microphone relatively easy.

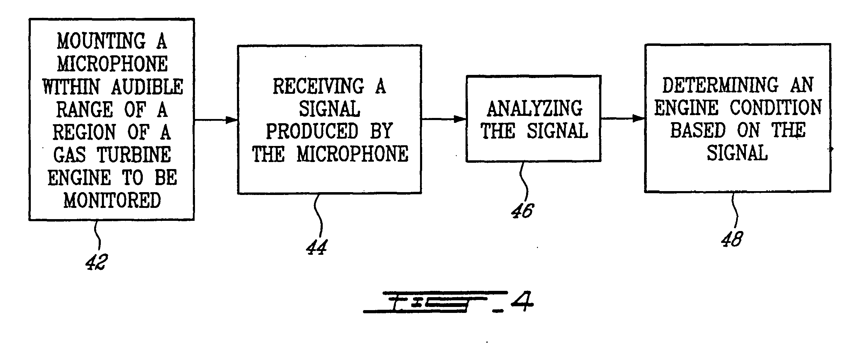

Referring to Fig. 4, the basis steps involved in the engine condition monitoring method 40 of the present invention for monitoring or detecting at least one engine condition or engine status characteristic are depicted. Particularly, the first step involves mounting a microphone outside of a given region of the gas turbine engine to be monitored. This can include mounting the microphone outside of an outer external casing of the engine, or alternatively, within the external casing, but outside of the monitored region, such as the main gas flow path through a compressor for example. Preferably, however, the microphone is externally mounted outside the engine, which allows for convenient access thereto, and further allows for easy displacement of the microphone in order to improve reception of the audible frequencies generated by the engine, or to displace the microphone completely to monitor another engine component. This also permits the microphone to be mounted about any engine, regardless of specific internal configuration or engine type, and to be done so either temporarily, as is the case for a prototype engine in design and development phases for example, or permanently if installed on an engine for normal in-service operation. Once the microphone is installed and connected to the signal processor and/or other electronic system controls, the microphone permits the production of an electric signal in response to sound frequencies generated by the engine. The second step 44 is then carried out, of receiving such a signal produced by the microphone. Once the output signal of the microphone 22 has been received, for example by the signal processor 26, the next step 46 of analyzing the signal is carried out. This can include, for example, processing the signal into a form configured for frequency analysis, and conducting a time-based frequency analysis of the signal. Further, the frequency analysis permits internal pressure pulsations of several components to be measured from the processed output signal, such that a given pressure pulsation signature can be identified. The analysis can thus include detecting a change in this pressure pulsation signature, which may be indicative of the selected engine condition monitored and/or to be detected. The last major step 48 of determining the selected engine condition, status indicator or characteristic based solely on the analysis of the microphone signal is then performed. More particularly, the selected engine condition is determined based on the results of the analysis step 46, such as by detecting a particular change in the measured pressure pulsation frequency know to occur prior to, or simultaneously with, the engine condition.

The above description is meant to be exemplary only, and one skilled in the art will recognize that changes may be made to the embodiments described without department from the scope of the invention disclosed. For example, although the microphone is preferably mounted outside an outer casing of the gas turbine engine, it remains possible to locate the microphone outside of a region to be monitored, the main gas flow path for example, but nevertheless within the outermost external engine casing. Further, although a single microphone is able to monitor several components at the same time, two or more microphones may be employed in order to monitor several separate regions of the engine simultaneously. In this case, the signal processor receives several input signals, corresponding to the number of microphones employed, and processes as required to permit the simultaneous analysis of each signal and independent detection of two or more engine conditions at once. Changes in engine noise signature detected from the signal of a single microphone may also be used for monitoring and detecting other engine conditions, status, health and/or faults, such as for example, gas flow leaks, flow conditions within a fluid conduit, blade tip rub of a rotor within a surrounding shroud, foreign object damage to a rotating component, pump health and cavitation, and pipe or component fretting. Still other modifications which fall within the scope of the present invention will be apparent to those skilled in the art, in light of a review of this disclosure, and such modifications are intended to fall within the appended claims. For example, in the case when the engine condition to be detected is compressor stall, the identification of a distinct change of the measured pressure pulsation signature at a given component's frequency, specifically in the form of an increase followed by a marked decrease in pressure. As well as mere detection of such an engine condition, measurement of a level of the pressure amplitude is also possible.

## Claims

1. A method of monitoring at least one engine condition of a gas turbine engine (10) comprising:
mounting a microphone (22) within audible range of a region of the gas turbine engine (10) to be monitored, the microphone (22) being spaced apart from said region;
receiving a signal produced by the microphone (22) in response to sound frequencies generated by fluid flow through the gas turbine engine (10) during operation thereof;
analyzing the signal to identify at least one characteristic representative of the engine condition; and
determining the engine condition based principally on the signal produced by the microphone (22).

2. The method as defined in claim 1, wherein the step of analyzing includes processing the signal into a form configured for frequency analysis.

3. The method as defined in claim 2, further comprising conducting a time-based frequency analysis of the signal.

4. The method as defined in claim 1, 2 or 3, wherein the sound frequencies correspond to internal pressure pulsations of the fluid flow, and the step of analyzing includes identifying a pressure pulsation signature produced by a selected rotating component of the gas turbine engine (10).

5. The method as defined in claim 4, wherein the rotating component is a compressor (14) which produces a distinct pressure pulsation signature and the engine condition is stall of the compressor (14), the step of determining the compressor stall comprises identifying a change in the distinct pressure pulsation signature.

6. The method as defined in claim 5, wherein identifying a change in the distinct pressure pulsation signature further comprises identifying a marked increase and subsequent decrease of the pressure oscillating at a frequency corresponding to the compressor (14).

7. The method as defined in claim 4, further comprising identifying at least two distinct pressure pulsation signatures, each having a different defined frequency range corresponding to one of at least two independent rotating components of the gas turbine engine (10), such that a component status parameter of said at least two independent rotating components is determinable from the signal.

8. The method as defined in any preceding claim, further comprising measuring a level of the engine condition detected.

9. The method as defined in claim 8, wherein the engine condition is aerodynamic loading of a compressor (14) of the gas turbine engine (10), the method further comprising predicting a compressor surge based on the measured level of aerodynamic loading on said compressor (14).

10. The method as defined in any preceding claim, wherein the step of mounting further comprising mounting the microphone (22) outside an outer casing (20) of the gas turbine engine (10).

11. The method as defined in any preceding claim, wherein the step of determining the engine condition is based solely on the signal produced by the microphone (22).

12. A method of detecting surge of a compressor (14) in a gas turbine engine (10) comprising:
mounting a microphone (22) in spaced apart relation with a main gas flow path of the compressor (14), within audible range thereof;
receiving a signal produced by the microphone (22) in response to audible frequencies generated by fluid flow through the compressor (14) during operation of the gas turbine engine (10);
analyzing the signal to determine at least one characteristic representative of compressor surge; and
detecting compressor surge based on said signal produced by said microphone (22).

13. The method as defined in claim 12, wherein the step of detecting compressor surge further comprises using solely said signal produced by said microphone (22).

14. A non-intrusive method of monitoring aerodynamic characteristics of at least one aerodynamic component in a gas turbine engine (10), the method comprising:
using a microphone (22) spaced apart from a region of the gas turbine engine (10) to be monitored and within audible range of the aerodynamic component therewithin, to produce an electrical output in response to audible frequencies corresponding to pressure pulsations in gas flowing past the aerodynamic component during operation of the gas turbine engine (10), the audible frequencies defining a noise signature of the aerodynamic component;
conducting a time-based frequency analysis of the electrical output to monitor changes in the noise signature; and
detecting an abnormal aerodynamic characteristic based on the electrical output produced by the microphone (22).

15. The method as defined in claim 14, wherein the step of detecting the abnormal aerodynamic characteristic is based solely on the electrical output produced by the microphone (22).

16. A system (25) for detecting at least one engine status characteristic of a gas turbine engine (10) comprising:
a microphone (22) spaced apart from a region of the gas turbine engine (10) to be monitored; and
a signal processor (26) operable to receive an electrical signal produced by the microphone (22) in response to audible frequencies defining a noise signature which corresponds to pressure pulsations in fluid flowing through the gas turbine engine (10) during operation thereof, the signal processor (26) being operable to analyze the electrical signal to detect said engine status characteristic based principally on the noise signature representative of said engine status characteristic.

17. The system (25) as defined in claim 16, further comprising an alerting device in communication with said signal processor (26) operable to indicate that said engine status characteristic is present.

18. The system (25) as defined in claim 16 or 17, wherein said signal processor (26) detects said engine status characteristic based solely on the noise signature read by the microphone (22).

19. The system (25) as defined in claim 16, 17 or 18, wherein the engine status characteristic detected is aerodynamic stall of a compressor (14) of the gas turbine engine.

20. The system (25) as defined in claim 19, wherein the compressor (14) produces said pressure pulsations, said signal processor (26) permitting a distinct change in said pressure pulsations to be identified which occurs when said compressor (14) approaches said aerodynamic stall condition.
